# EUROPEAN PATENT SPECIFICATION

(11) **EP 2 290 416 B1**
(45) Date of publication and mention of the grant of the patent: **18.03.2020**
(21) Application number: 09766551.7
(22) Date of filing: 09.06.2009
(51) Int. Cl.: G02B 6/38

(54) **CONNECTION DEVICE AND OPTICAL IMAGING DEVICE**
VERBINDUNGSVORRICHTUNG UND OPTISCHE BILDGEBUNGSVORRICHTUNG
DISPOSITIF DE CONNEXION ET DISPOSITIF D'IMAGERIE OPTIQUE

(30) Priority: 20.06.2008 JP 2008161062
(43) Date of publication of application: 02.03.2011
(73) Proprietor: Terumo Kabushiki Kaisha, Tokyo 151-0072 (JP)
(72) Inventor: Irisawa Yuichiro, Kanagawa 259-0151 (JP)
(74) Representative: Dossmann, Gérard
(86) International application number: PCT/JP2009/060518
(87) International publication number: WO 2009/154103

(56) References cited:
- WO-A1-2008/023741
- WO-A1-2008/023741
- JP-A- 8 327 855
- JP-U- 4 070 608
- JP-U- 4 091 315
- US-A- 5 668 904

## Description

### Technical Field

The present invention relates to a coupling device for coupling optical fiber cables and to component members of the coupling device.

In particular the present invention relates to a coupling device for optical fibers according to the preamble of claim 1, such as it is for example known from WO 2008/023741 A1.

### Background Art

Attendant on the progress in large-capacity communication and the like, in recent years, there has been an increasing demand in communication and related fields for optical fiber connectors as a coupling device for coupling of optical fiber cables. Specific examples of the optical fiber connector include FC connector, SC connector, and MU connector.

These connectors are each provided with a mechanism for avoiding relative turning of optical fiber cables, in order to prevent damaging from occurring between ends (contact surfaces) of the optical fiber cables connected to each other. For instance, in the case of an FC connector, turning in the circumferential direction is obviated by a pin and a groove, and, in the cases of an SC connector and an MU connector, turning in the circumferential direction is avoided by utilizing the shapes of connectors (see, for example, Patent Documents 1 and 2 listed below).

On the other hand, such a mechanism as above-mentioned makes it necessary for the user to perform alignment in the circumferential direction at the time of coupling the connectors. Especially, in the case of APC type connectors in which an inclination angle is provided at ends of optical fiber cables for the purpose of suppressing reflection noise, alignment with higher accuracy is demanded (see, for example, Patent Document 3 set forth below).

Meanwhile, also in the medical field, in recent years, there have been more and more medical devices based on use of light, such as optical coherence tomography system (OCT). These devices utilize light as a signal, and optical fiber cables are used for transmission of signals. Therefore, the use of optical fiber connectors for coupling of optical fiber cables is indispensable (see, for example, Patent Document 4 set forth below).

### Patent Documents

Patent Document 1: JP-T-2005-533533
Patent Document 2: JP-T-2001-507251
Patent Document 3: WO2008/023741
Patent Document 4: Japanese Patent No. 4037538

However, in the coupling device involving rotation of optical fiber as described in Patent Document 4, an optical fiber to be rotated on the inside is connected while gripping a non-rotated housing on the outside, at the time of coupling the optical fiber cables. At the time of coupling, therefore, a compressive load is exerted on a bearing or O-ring at the time of coupling, possibly leading to breakage. In the case where a play for rotation is provided between a housing on the outside and a rotatable element in the inside as described in Patent Document 3, there is an undesirable possibility that thorough coupling of connectors inside might not be completed even after the housings are connected. Besides, in the case where the bearing is a disk-shaped flange, there is a possibility of such an inconvenience as deformation due to friction, arising from the contact of the rotating flange with non-rotated parts.

### Disclosure of Invention

### Technical Problems

The object of the present invention, made in consideration of the above-mentioned problems, is to ensure, in a coupling device for coupling optical fiber cables, that contact between inside members at the time of coupling of connectors is reduced and coupling can be carried out easily.

### Technical Solution

The object as above is attained by a coupling device according to claim 1.

The dependent claims relate to advantageous embodiments.

### Advantageous Effects

According to the present invention, it is ensured, in a coupling device for coupling optical fiber cables, that members are not damaged at the time of coupling of connectors, coupling is performed assuredly, and contact between inside members at the time of internal drive after the coupling can be reduced.

### Brief Description of Drawings

[FIG. 1]

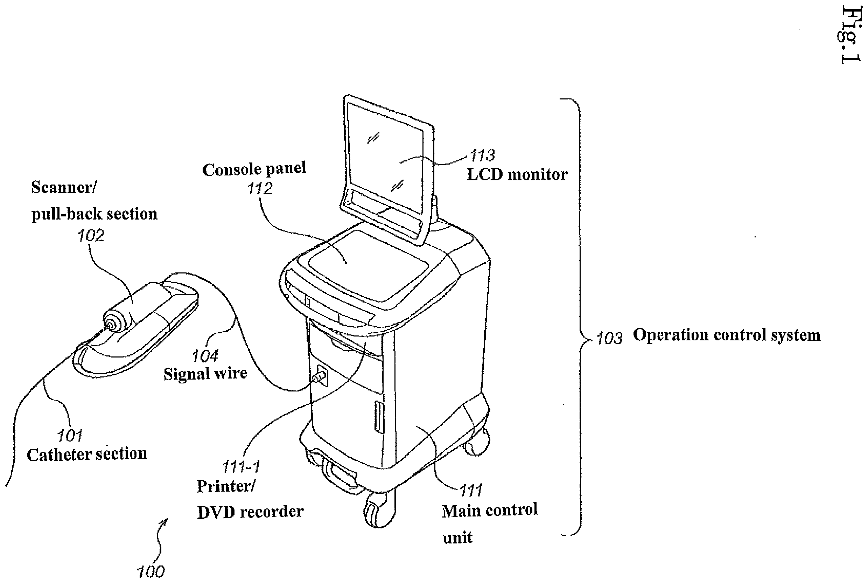

   FIG. 1 illustrates the appearance configuration of an optical coherence tomography system.
[FIG. 2]

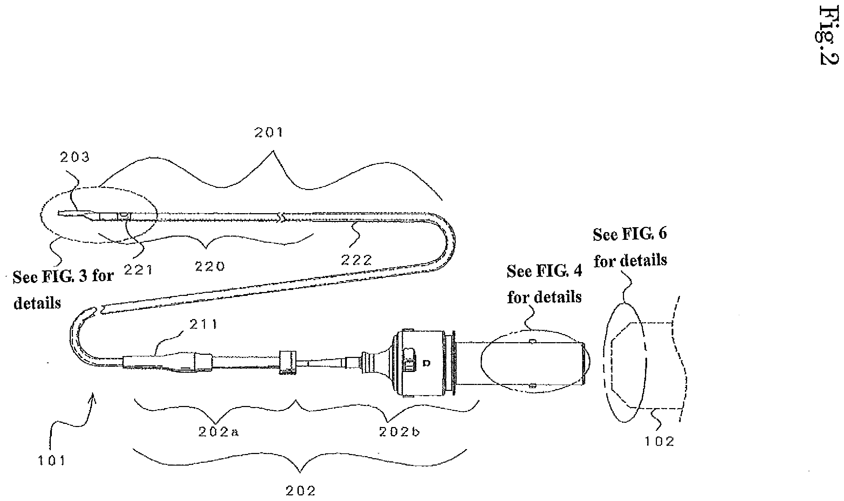

   FIG. 2 illustrates general configuration of a catheter section 101.
[FIG. 3]

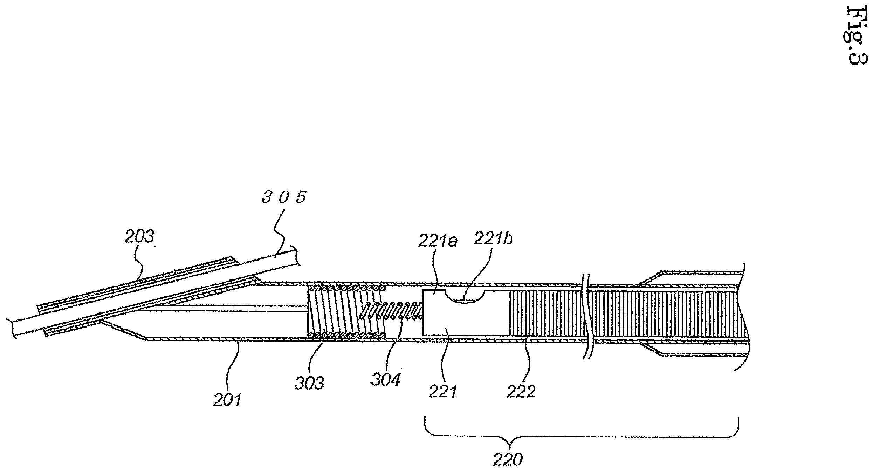

   FIG. 3 illustrates the configuration of a distal portion of the catheter section 101.
[FIG. 4]

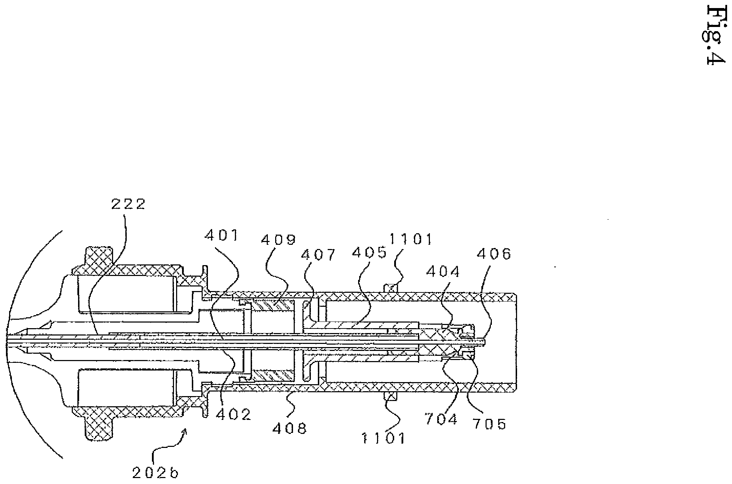

   FIG. 4 is a sectional view illustrating the inside configuration of a drive shaft connector.
[FIG. 5]

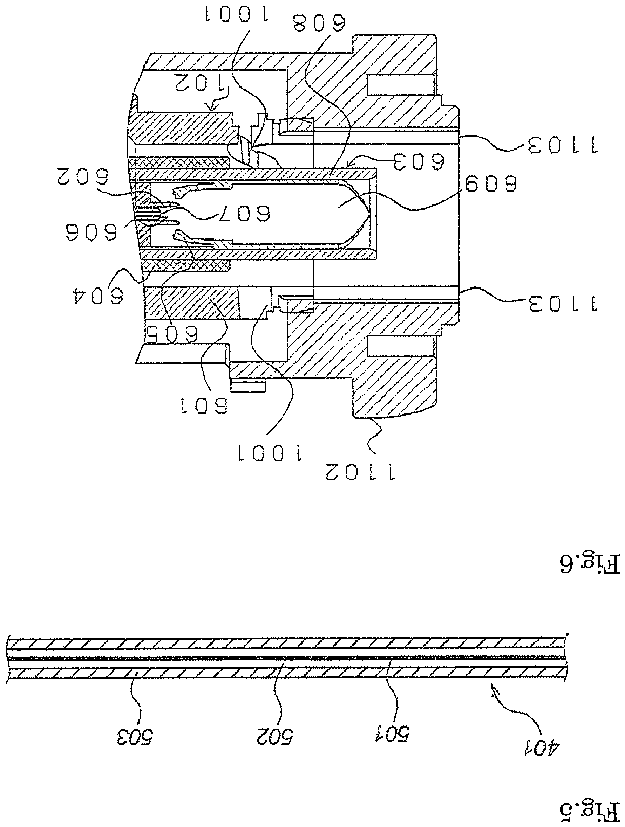

   FIG. 5 is a partly sectional view illustrating the configuration of an optical fiber.
[FIG. 6]
   FIG. 6 illustrates the inside configuration of a mounting part of a scanner/pull-back section 102 (on the side for coupling with the proximal end of the drive shaft connector 202b).
[FIG. 7]

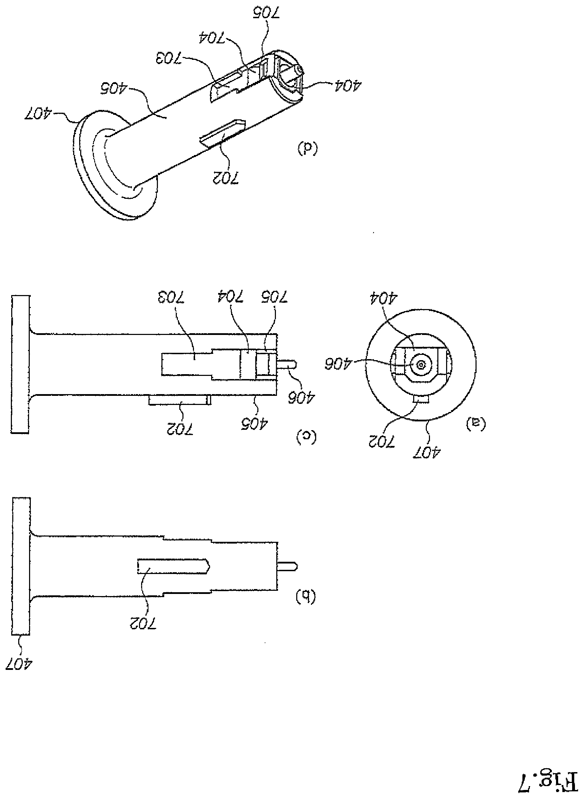

   FIG. 7 shows views illustrating the appearance configuration of a connector device.
[FIG. 8]

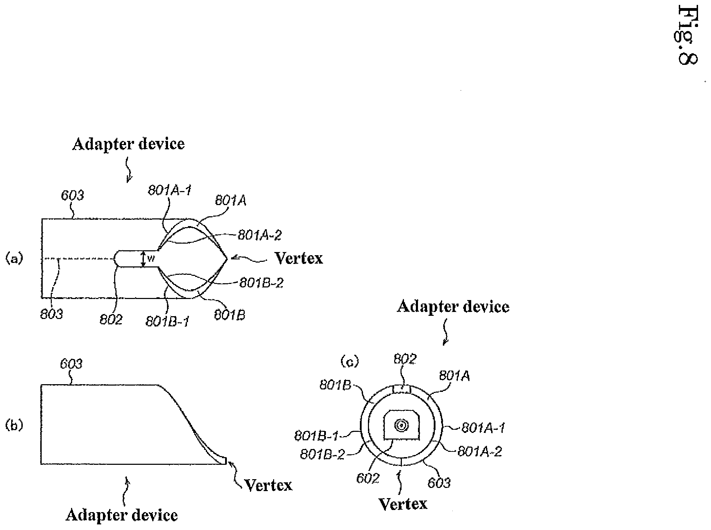

   FIG. 8 shows views illustrating the appearance configuration of an adapter device.
[FIG. 9]

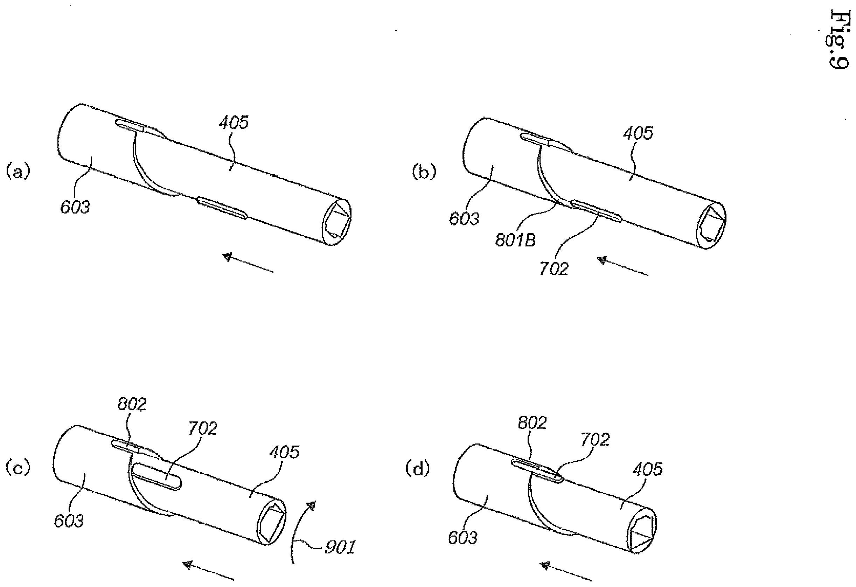

   FIG. 9 shows views illustrating operations of a connector fixing member 405 and an adapter fixing member 603 at the time of coupling of coupling devices.
[FIG. 10]

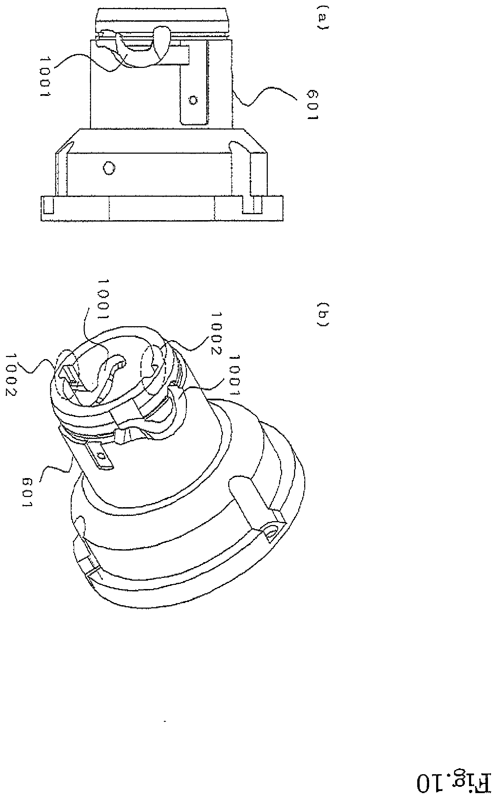

   FIG. 10 shows views illustrating an adapter device housing 601.
[FIG. 11]

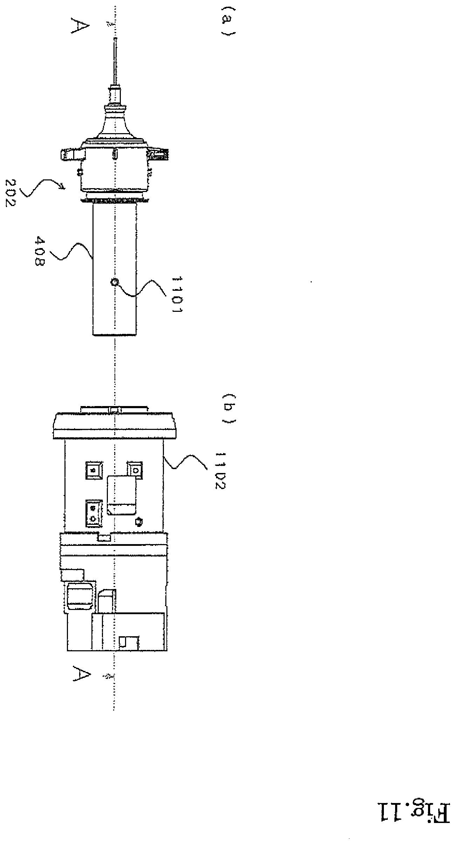

   FIG. 11 shows appearance views of a connector device and an adapter device (head 1102).
[FIG. 12]

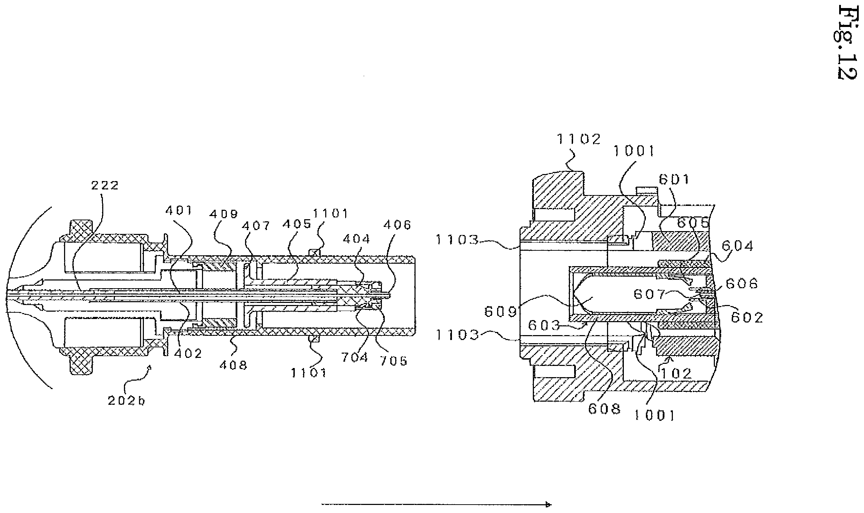

   FIG. 12 shows sectional views of the connector device and the adapter device (head 1102).
[FIG. 13]

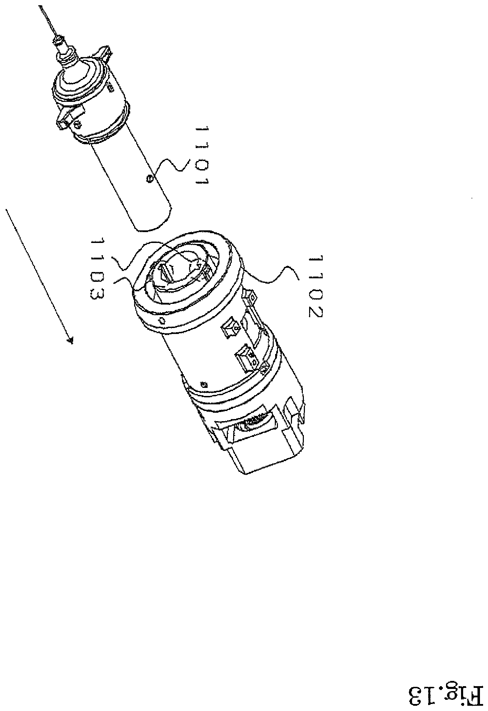

   FIG. 13 shows perspective views of the connector device and the adapter device (head 1102).
[FIG. 14]

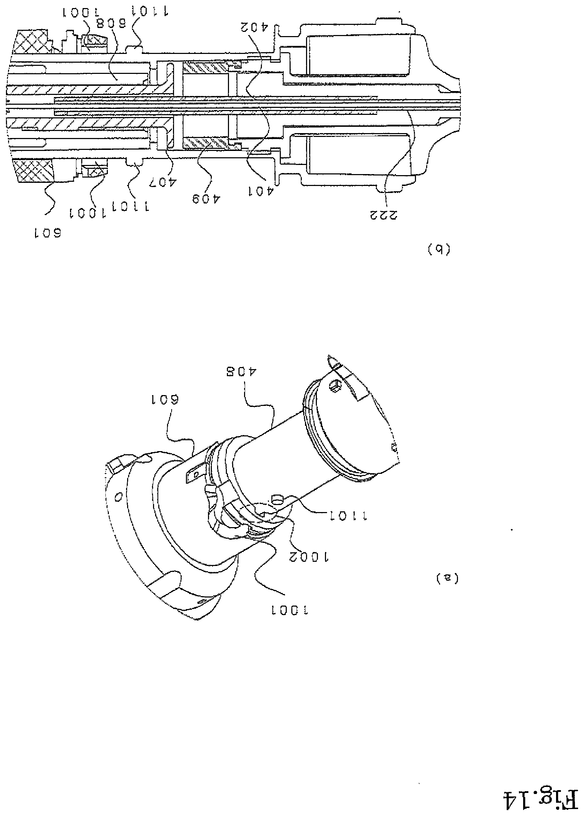

   FIG. 14 shows views illustrating the state of an elastic member, and a housing fitting portion, before coupling of optical fibers.
[FIG. 15]

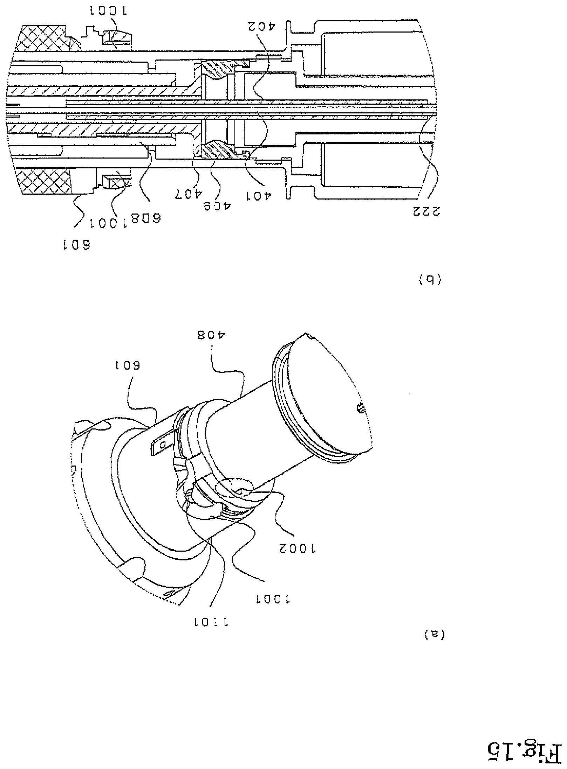

   FIG. 15 shows views illustrating the state of the elastic member, and the housing fitting portion, at the time of coupling of the optical fibers.
[FIG. 16]

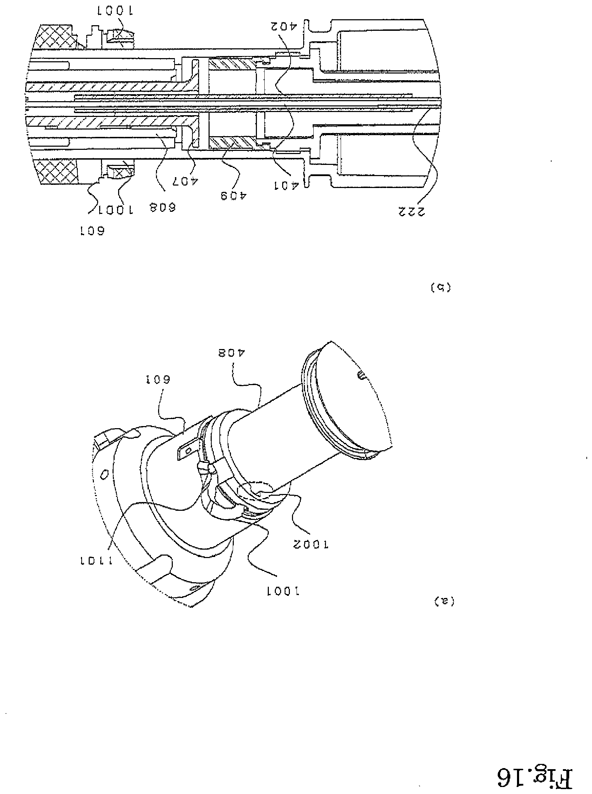

   FIG. 16 shows views illustrating the state of the elastic member, and the housing fitting portion, after coupling of the optical fibers.
[FIG. 17]

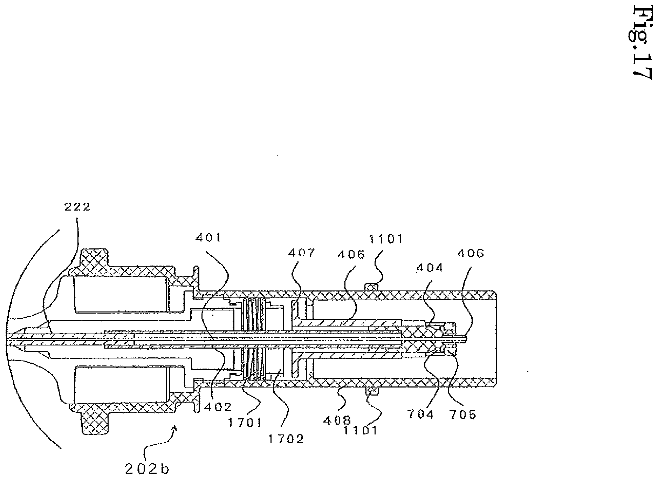

   FIG. 17 illustrates a connector device according to a second embodiment of the coupling device of the present invention.

### Modes for Carrying Out the Invention

Now, embodiments of the present invention will be described in detail below, while referring to the accompanying drawings, as required. Incidentally, in the following embodiments, description will be made of the case where the coupling device according to the present invention is applied to an optical coherence tomography system (OCT) which is a kind of optical imaging device, but the object for application of the invention is not limited to this but may be other medical device. Naturally, other devices than medical devices may be adopted as the object for application of the invention.

### Example 1

### 1. Appearance configuration of optical coherence tomography system

FIG. 1 illustrates the appearance configuration of an optical coherence tomography system 100 to which the coupling device according to a first embodiment of the present invention has been applied.

As shown in FIG. 1, the optical coherence tomography system 100 includes a catheter section 101 provided as a detachable optical probe, a scanner/pull-back section 102, and an operation control system 103, wherein the scanner/pull-back section 102 and the operation control system 103 are connected to each other by a signal wire 104.

The catheter section 101 is inserted directly into a blood vessel, for measurement of the state inside the blood vessel by use of low-coherence light radiated from an imaging core (see FIGS. 2 and 3). The scanner/pull-back section 102 performs radial scanning of the optical imaging core in the catheter section 101.

The operation control system 103 has a function for inputting various set points in performing optical coherence tomography and a function for processing data obtained by measurement and thereby displaying a sectional image.

In the operation control system 103, numeral 111 denotes a main control unit which processes data obtained by measurement and outputs the results of processing. Numeral 111-1 denotes a printer and DVD recorder, which performs such operations as printing the results of processing by the main control unit 111, and storing the results of processing as data.

Numeral 112 denotes a console panel. The user inputs various set points through the console panel 112. Numeral 113 denotes an LCD monitor, which displays the results of processing by the main control unit 111.

### 2. Configuration of catheter section 101

### 2.1 General configuration of catheter section 101

Now, the general configuration of the catheter section 101 will be described below, using FIG. 2. As shown in FIG. 2, the catheter section 101 includes a long catheter sheath 201 to be inserted into a blood vessel, and a connector section 202 which is not inserted into the blood vessel but disposed on the side of the user's hand to be operated by the user. At the distal end of the catheter sheath 201, a tube 203 constituting a guide wire lumen is provided. The catheter sheath 201 is formed as a lumen which extends continuously from a part for coupling with the tube 203 to a part for coupling with the connector section 202 (for details, see FIG. 3).

In the inside of the lumen of the catheter sheath 201, an imaging core 220 is inserted so as to extend over substantially the whole length of the catheter sheath 201. The imaging core 220 includes a light transmission-reception section 221 for transmission and reception of measuring light, and a drive shaft 222 which is provided therein with an optical fiber cable and which transmits a driving force for rotating the optical fiber cable.

The connector section 202 includes a sheath connector 202a formed integrally with the proximal end of the catheter sheath 201, and a drive shaft connector 202b fixed to the proximal end of the drive shaft 222 so as to permit the drive shaft 222 to be rotated.

An anti-kinking protector 211 is provided at the boundary between the sheath connector 202a and the catheter sheath 201. This ensures that a predetermined rigidity is maintained, and bending (kinking) due to abrupt change in physical properties can be prevented from occurring.

The proximal end (for details, see FIG. 4) of the drive shaft connector 202a is so configured that it can be connected to a mounting part of the scanner/pull-back section 102 (for details, see FIG. 6) which will be described later (the coupling device according to the present embodiment is applied to coupling of optical fiber cables between the proximal end of the drive shaft connector 202 and the scanner/pull-back section 102).

### 2.2 Configuration of distal portion of catheter section 101

Now, the configuration of a distal portion of the catheter section 101 will be described below in FIG. 3.

In FIG. 3, the light transmission-reception section 221 includes a prism or mirror 221b and a housing 221a for holding it. Measuring light is radiated from the prism or mirror 221b toward a tissue in a body cavity, and the reflected light from the tissue in the body cavity is received by the prism or mirror 221b.

The drive shaft 222 is formed in a coil shape, with an optical fiber cable disposed therein to extend from the light transmission-reception section 221 to the connector section 202.

The housing 221a has the light transmission-reception part 221b in the inside thereof, and is connected to the drive shaft 222 on the proximal end side thereof. In addition, a short coil-shaped elastic member 304 is provided on the tip end side of the housing 221a.

The elastic member 304 is a member formed by putting a stainless steel wire into a coil shape, and the stability of the imaging core 222 at the time of rotation is enhanced by the presence of the elastic member 304 disposed on the tip end side thereof.

Numeral 303 denotes a radiopaque coil, provided for confirmation under radioscopy of the position of a distal portion of the catheter sheath 201 in a living body.

The tube 203 defines a hole in which a guide wire 305 can be inserted. The guide wire 305 is preliminarily inserted in a body cavity, and is used for guiding the catheter sheath 201 to a diseased part.

The drive shaft 222 is capable of rotation and sliding relative to the catheter sheath 201, and is composed of a member which is flexible and has a property of being able to transmit rotation in a favorable manner, for example, a solid-coiled multilayer coil formed from a metallic wire of stainless steel or the like.

### 2.3 Configuration of drive shaft connector 202b

FIG. 4 is a sectional view showing the inside configuration of the proximal end of a drive shaft connector 202b. As shown in FIG. 4, a connector (second coupling terminal) 404 for optical fiber is disposed at the proximal end of the drive shaft connector 202b, whereby an optical fiber cable 401 is connected to an optical fiber cable in the scanner/pull-back section 102.

At the time of coupling with a first coupling terminal to be described later, a connector fixing member 405 cooperates with a first fixing member in aligning the connector 404 in the circumferential direction. Incidentally, in the present embodiment, for convenience, a terminal on the catheter section side is referred to as "connector" and a terminal on the other side is referred to as "adapter." Besides, in the following, the connector 404 and a connector fixing member 405 will together be referred to as connector device.

The connector 404 for optical fiber is joined to the drive shaft 222 through a coupling pipe 402. In addition, the connector 404 is disposed inside the connector fixing member (second fixing member) 405 having a hollow cylindrical shape, and holds and fixes an end portion of the optical fiber cable 401 provided with a ferrule 406 at the tip end thereof. The end portion of the optical fiber cable 401 is processed into an APC type formed with an inclination angle to the direction of light, for preventing generation of noise due to reflection of light on the end face. The connector fixing member 405 has a disk-shaped flange 407 at an end portion corresponding to the distal side of the catheter sheath 201 (at an end portion on the side opposite to the adapter side), and is rotatably held inside the housing 408 of the drive shaft connector 202b.

In addition, an elastic member 409 is provided inside the housing 408 at such a position near the flange 407 that it can make contact with the flange 407, and, at the time of coupling with the adapter to be described later, the elastic member 409 presses the flange 407, whereby coupling of optical fiber cables is facilitated. Besides, after the coupling of the optical fiber cables, the elastic member 409 is non-contact with the flange 407, so that damage or deformation of inside members can be prevented from occurring during internal drive. The elastic member 409 can be composed of a synthetic rubber or metallic spring. A material with low tackiness, such as silicone rubber, is particularly preferable as the material for the elastic member 409.

The housing 408 is formed with a pair of projections 1101 at an outer surface thereof.

### 2.4 Configuration of optical fiber cable 401

FIG. 5 is a partly sectional view showing the general configuration of a single-mode optical fiber cable. The optical fiber cable 401 is comprised of a core 501 for transmitting light, and a clad 502 slightly lower in refractive index than the core 501. Light is transmitted through repetition of total reflection on a boundary surface between the core 501 and the clad 502, only in the case where the angle of incidence is larger than a critical angle. In addition, the outer surface of the clad 502 of the optical fiber 401 is covered with a resin material called jacket 503 so that even in the case where the optical fiber 401 is bent at a large curvature, stress will be dispersed and the optical fiber cable 401 is prevented from being broken.

### 3. Inside configuration of scanner/pull-back section 102

FIG. 6 is a partly sectional view showing the inside configuration of a mounting part of the scanner/pull-back section 102 (on the side for coupling with the proximal end of the drive shaft connector 202b). In FIG. 6, numeral 601 denotes a housing of an adapter device provided inside the mounting part. The housing 601 is fixed inside a head 1102 constituting an outer surface of the mounting part. A housing 408 of the drive shaft connector 202b is fitted to an inner surface of the housing 601 when the connectors are connected. The housing 408 is provided with a pair of grooves 1001 which are continuous with groove inlets 1103 of the head 1102 and into which the pair of projections 1101 of the housing 408 can be received.

Numeral 602 denotes an adapter (first coupling terminal) to be coupled to the connector 404, and the adapter 602 is so held as to be rotatable relative to the housing 601. Numeral 603 denotes an adapter fixing member (first fixing member) which has a hollow cylindrical shape and in which the adapter 602 is so fixed as to be incapable of relative rotation. At the time of coupling with the connector 404, the adapter fixing member 603 cooperates with the connector fixing member 405 in aligning the connector 404 in the circumferential direction. The adapter fixing member 603 is joined to a driving force relay pipe 604 which relays a driving force of a rotational driving part (motor) (not shown). This ensures that, after coupling with the connector 404, a rotational drive of the driving force relay pipe 604 is transmitted to the drive shaft 222.

The adapter fixing member 603 is formed with a pair of claws 605 on an inner surface thereof. The pair of claws 605 is to be engaged with the connector 404, thereby firmly uniting the connector 404 with the adapter 602. The adapter 602 is formed with a hole 606 of a female type structure for receiving the ferrule 406 of the connector 404, and an optical fiber end portion 607 processed into the APC type is fixed in the depth of the hole 406.

In addition, the adapter fixing member 603 is composed of a protective tube 608 defining an outer surface of the adapter fixing member 603, and a guide tube 609 which is fixed to an inner surface of the protective tube 608 and which defines an inner surface of the adapter fixing member 603.

Incidentally, in the following, the housing 601 and the adapter 602 and the adapter fixing member 603 will together be referred to as adapter device. In other words, the coupling device is composed of the connector device and the adapter device.

### 4. Configuration of coupling device

Now, the coupling device according to the present embodiment will be described below.

### 4.1 Configuration of connector device

FIG. 7 shows views illustrating the appearance configuration of the connector device, in which (a) is a front view, (b) is a top plan view, (c) is a side view, and (d) is a perspective view.

As shown in (a) of FIG. 7, the connector device includes the connector fixing member 405 having a hollow cylindrical shape, and the connector 404 disposed inside the connector fixing member 405. Numeral 406 denotes the ferrule formed at an end portion of the connector 404.

In addition, as shown in (a) to (d) of FIG. 7, an outer peripheral surface of the connector fixing member 405 is formed at a part thereof with a projection 702 along the longitudinal direction. A proximal-side end portion of the projection 702 is formed as a pointed end portion for reducing contact resistance at the time of contact with an end face of the adapter fixing member 603 which will be described later. The connector fixing member 405 has an outside diameter R so determined that when the connector fixing member 405 is inserted in the hollow part of the adapter fixing member 603, the outer peripheral surface of the connector fixing member 405 slides relative to the inner wall surface of the adapter fixing member 603.

Besides, the outer peripheral surface of the connector fixing member 405 is formed, at positions for avoiding interference with the projection 702, with a pair of slits 703 in left-right symmetry. Side surfaces of the connector 404 are exposed in the inside of the slits 703, and there are formed projections 704 to be engaged with the claws 605 of the adapter fixing member 603.

When the connector 404 and the adapter 602 and the adapter fixing member 603 are united by the claws 605 and the projections 704, the connector fixing member 405 is not taking part in the coupling between them, and the connector fixing member 405 can be slid to some extent forward and backward along the axial direction. To detach the connector 404 and the adapter 602 thus connected together, the user grips the housing 408 of the drive shaft connector 202b and pulls it out, whereon the connector fixing member 405 is slid in the pulling-out direction through the flange 407. In this case, round projections 705 formed at proximal end portions of the slits 703 push open the claws 605 to disengage the claws 605 from the projections 704, thereby enabling the connector 404 to be pulled out of the adapter 602.

### 4.2 Adapter device

FIG. 8 shows views illustrating the appearance configuration of the guide tube 609 of the adapter device, in which (a) is a top plan view, (b) is a side view, and (c) is a front view.

As above-mentioned, the adapter device has the adapter fixing member 603 having a hollow cylindrical shape, and the adapter 602 and the housing 601 which are fixed inside the adapter fixing member 603. While the adapter fixing member 603 is composed of the protective tube 608 and the guide tube 609, the guide tube 609 is solely shown in FIG. 8 for description of the structure of the guide tube 609. The protective tube 608 is provided for the purpose of covering the sharp tip of the guide tube 609, thereby preventing injury of the user or breakage of the connector 404, and for guiding the insertion of the fixing member 405 into the guide tube 609. The protective tube 608 and the guide tube 609 may be molded as one body with each other. As shown in FIG. 8, the guide tube 609 is provided on its open side with end faces 801A and 801B which are inclined end faces.

In addition, as shown in (a) of FIG. 8, the end faces 801A and 801B of the guide tube 609 are partly provided with a notch 802 extending in the longitudinal direction (the axial direction of the hollow part) of the adapter fixing member 603. The notch 802 has a width w in the circumferential direction which is so designed that the projection 702 of the connector fixing member 405 will be fitted in the notch 802.

Besides, as shown in (a) of FIG. 8, the end face 801A is an end face extending clockwise, along the circumferential direction, starting from the notch 802, whereas the end face 801B is an end face extending counterclockwise. The end face 801A and the end face 801B intersect each other at a position circumferentially spaced by 180 degrees from the notch 802 (the position will hereinafter be referred to as vertex). The end face 801A and the end face 801B are symmetrical with each other, the center of symmetry being a plane on which the notch 802 and the vertex are located.

In addition, the end face 801A has an outer wall boundary line 801A-1 as the boundary between itself and the outer wall, and an inner wall boundary line 801A-2 as the boundary between itself and the inner wall. Similarly, the end face 801B has an outer wall boundary line 801B-1 as the boundary between itself and the outer wall, and an inner wall boundary line 801B-2 as the boundary between itself and the inner wall.

The outer wall boundary line 801A-1 extends circumferentially clockwise by 180 degrees in a helical shape starting from the notch 802, to intersect the outer wall boundary line 801B-1 at the vertex. Similarly, the outer wall boundary line 801B-1 extends circumferentially counterclockwise by 180 degrees in a helical shape starting from the notch 802, to intersect the outer wall boundary line 801A-1 at the vertex.

Besides, the inner wall boundary line 801A-2 extends circumferentially clockwise by 180 degrees in a helical shape starting from the notch 802, to intersect the inner wall boundary line 801B-2 at the vertex. Similarly, the inner wall boundary line 801B-2 extends circumferentially counterclockwise by 180 degrees in a helical shape starting from the notch 802, to intersect the inner wall boundary line 801A-2 at the vertex. In this case, the outer wall boundary lines and the inner wall boundary lines are equal in helical pitch.

### 4.3 Operation at the time of coupling

Shown in (a) to (d) of FIG. 9 are views illustrating operations of the connector fixing member 405 and the adapter fixing member 603 at the time of coupling of the coupling device. Incidentally, in FIG. 9, the drive shaft connector 202b and the housing 601 and the protective tube 608 are omitted, for convenience of description. As shown in (a) of FIG. 9, at the time of coupling, first, with the drive shaft connector 202b (not shown) gripped, a tip end portion of the connector fixing member 405 is inserted into the hollow part of the adapter fixing member 603 at an arbitrary angle in the circumferential direction.

With the connector fixing member 405 pushed further in the insertion direction, the projection 702 of the connector fixing member 405 and the end face 801B of the adapter fixing member 603 come into contact with each other (see (b)). With the connector fixing member 405 urged further in the insertion direction, the projection 702 is slid along the end face in the direction of arrow 901.

The sliding of the projection 702 along the end face in the direction of arrow 901 results in that the connector fixing member 405 is rotated inside the drive shaft connector 202b (not shown) in the circumferential direction (see (c)).

With the connector fixing member 405 pushed further in the insertion direction, the connector fixing member 405 is rotated further. When the projection 702 soon reaches the position of the notch 802, the projection 702 is fitted into the notch 802 (in short, mere pushing of the connector fixing member 405 causes the projection 702 to be guided into the notch 802). Then, with the connector fixing member 405 pushed further in, the projection 702 is inserted straight along the notch 802, whereby the adapter 602 and the connector 404 are connected to each other. In other words, the fitting of the tip end of the projection 702 into the notch 802 restricts the movement of the connector fixing member 405 in the circumferential direction (or, completes the alignment in the circumferential direction), and the insertion of the projection 702 along the notch 802 realizes the coupling between the adapter 602 and the connector 404.

Thus, even without strict alignment of the connector 404 in the circumferential direction, if only the tip end of the connector fixing member 405 is inserted into the hollow part of the adapter fixing member 603, the further insertion of the connector fixing member 405 is automatically attended by guiding of the projection 702 toward the notch 802, whereby the desired alignment of the connector fixing member 405 in the circumferential direction is completed.

As a result, in the coupling device for coupling optical fiber cables, the alignment in the circumferential direction for coupling the connectors to each other can be carried out easily. Specifically, the user is required only to move the housing 408 of the drive shaft connector 202b rectilinearly in the insertion direction, whereby the alignment of the connector fixing member 405 in the circumferential direction is automatically carried out, and the desired alignment is completed.

FIG. 10 illustrates the housing 601 as a component inside the head 1102 of the mounting part, in which (a) is a top plan view and (b) is a perspective view. The housing 601 is provided with a pair of grooves 1001 at positions symmetrical about the axis of a tubular body thereof. The projections 1101 (described later) provided on the housing 408 of the connector device are fitted into the two grooves 1001 through groove inlets 1002, respectively.

The groove 1001 is so configured that when the connector fixing member 405 is inserted into the adapter fixing member 603, the projection 1101 is inserted into the groove 1001, then, with the connector fixing member 405 further urged in the insertion direction, the projection 1101 is slid along the groove 1001, and the projection is stopped upon reaching a terminal end of the groove 1001 after a returning motion in a direction reverse to the insertion direction, whereby the coupling between the adapter 602 and the connector 404 is realized. Specifically, the groove 1001 is so configured that the projection 1101 proceeds in a rotating direction perpendicular to the insertion direction, after making a U-turn from the insertion direction. Incidentally, while the groove 1001 in the present embodiment is not penetrating in the region of the groove inlet 1002 but is penetrating in the depth region, this configuration is not limitative.

FIG. 11 shows appearance views of the connector device and of the adapter device covered by the head 1102, in which (a) is a side view of the connector section 202 and (b) is a side view of the adapter device (head 1102). In addition, FIG. 12 is a sectional view taken along line A-A of FIG. 11, and FIG. 13 is a perspective view illustrating the manner in which the connector section 202 and the adapter device (head 1102) are connected to each other.

As shown in FIGS. 11 to 13, the housing 408 of the connector device is provided with the projection 1101, and the housing 601 of the adapter device is disposed inside the head 1102 of the adapter device. Besides, the groove inlet 1103 continuous with the groove 1001 of the housing 601 is provided in an inlet portion of the head 1102. Specifically, when the head 1102 and the housing 408 of the connector device are fitted to each other, the groove inlet 1103 disposed at the head 1102 and the groove 1001 disposed at the housing 408 of the connector device are located at the same place in the circumferential direction.

The coupling between the connector device and the adapter device will be described using FIGS. 14 to 16. In each of FIGS. 14 to 16, (a) shows an appearance view of the condition where the projections 1101 of the housing 408 of the connector device are inserted in the grooves 1001 of the adapter device housing 601, and (b) illustrates the state of the elastic member when the projections 1101 of the connector device housing 408 are inserted in the grooves 1001 of the adapter device housing 601. Incidentally, the head 1102 is omitted in the drawings, for easier understanding. As shown in (a) and (b) of FIG. 14, at the time of coupling, first, the projections 1101 are inserted into the grooves 1001. Next, as shown in (a) of FIG. 15, the housing 408 of the connector device is slid further in the insertion direction; when the projections 1101 are located in the deepest portions of the grooves 1001, the disk-shaped flange 407 presses the elastic member 409, so that the elastic member 409 is compressed (see (b) of FIG. 15). Besides, in this instance, an optical fiber connector of the connector device and an optical fiber end portion on the adapter device side are connected to each other. When the projections 1101 are further slid along the grooves 1001 as shown in (a) of FIG. 16, the projections 1101 proceed in a rotating direction perpendicular to the insertion direction, and stop at terminal ends of the grooves 1001. In this instance, the disk-shaped flange 407 and the elastic member 409 are non-contact with each other (see (b) of FIG. 16).

Thus, according to the coupling device in the present embodiment, the optical fiber connectors are firmly connected to each other by the elastic force of the elastic member 409, and the connector device and the adapter device are fitted to each other, so that the couplings of both the pairs to be connected are carried out simultaneously. Here, the elastic member 409 functions as a pusher while being compressed; therefore, the optical fiber connectors can be prevented from being damaged due to excessive pushing-in thereof, and defective coupling of the optical fiber connectors can be prevented from occurring due to insufficient pushing-in thereof. In addition, after the elastic member 409 connects the optical fiber connectors, the connector device is slightly moved away from the adapter device, so that the elastic member 409 functioning as a pusher is separated from the flange 407 serving as a rotatable element. Therefore, even in the case where the rotatable element is rotated at high speed, damaging due to contact of the rotatable element with non-rotated members is avoided. Accordingly, coupling of the connectors for optical fibers can be carried out easily.

### Example 2

FIG. 17 is a view showing a connector device according to a second embodiment of the coupling device of the present invention. As shown in FIG. 17, in the present embodiment, an elastic member 409 for pressing a disk-shaped flange 407 at the time of coupling between optical fiber cables is composed of a metallic coil spring 1701. The coil spring 1701 is provided with a cylindrical pusher 1702 at an end portion thereof. The pusher 1702 presses the disk-shaped flange 407, whereby optical fibers are connected to each other. The material for forming the coil spring 1701 may be any material that can exhibit elasticity.

## Claims

1. A coupling device for coupling optical fiber cables (401), comprising:
a first fixing member which has a first coupling terminal (602) disposed inside an adapter device (601, 602, 603) and which has a hollow part opened at an end thereof; and
a second fixing member which has a second coupling terminal (404) disposed inside a connector device (404, 405) and which has an outer wall so formed as to be adapted to slide along an inner wall of the first fixing member when inserted into the first fixing member;
**characterized in that** a housing of the adapter device (601, 602, 603) is provided with at least one curved groove (1001), an outer wall of the connector device housing (408) is provided with at least one projection (1101) at a part thereof, the second fixing member further has an elastic member (409) on the proximal end side thereof; and
the groove (1001) is so configured that when the second fixing member is inserted into the first fixing member, the projection (1101) is inserted into the groove (1001), and, with the projection (1101) inserted along the groove (1001), the elastic member (409) is adapted to press the disk-shaped flange (407), whereby the first coupling terminal (602) and the second coupling terminal (404) are connected to each other, then, with the second fixing member further urged in the insertion direction, the projection (1101) is slid along the groove (1001), and the projection is stopped after a returning motion in a direction reverse to the insertion direction,
wherein the disk-shaped flange (407) is in non-contact with the elastic member (409).

2. The coupling device according to claim 1, wherein there are projections (704) formed on the connector device (404, 405) and there are claws (605) formed on the adapter device (601, 602, 603), with the projections (704) to be engaged with claws (605).

3. The coupling device according to claim 1, wherein the second fixing member is rotatably held inside the connector device housing (408).

4. The coupling device according to claim 1,
wherein the groove (1001) is so configured that the projection (1101) proceeds in a rotating direction perpendicular to the insertion direction, after making a U-turn from the insertion direction.

5. The coupling device according to claim 1,
wherein the elastic member (409) is a resin or metallic member.

6. An optical imaging device comprising:
an optical probe (101) with an optical fiber rotatably incorporated therein;
a controller (111) which has a light source and which sends and receives a signal to and from the optical probe (101); and
a coupling device according to any of the preceding claims by which the optical probe and the controller are connected to each other.

## Patentansprüche

1. Kupplungsvorrichtung zum Kuppeln von Lichtwellenleiterkabeln (401), umfassend:
ein erstes Befestigungselement, das einen ersten Kupplungsanschluss (602) aufweist, der innerhalb einer Adaptervorrichtung (601, 602, 603) angeordnet ist, und das einen hohlen Teil aufweist, der an einem Ende davon geöffnet ist; und
ein zweites Befestigungselement, das einen zweiten Kupplungsanschluss (404) aufweist, der innerhalb einer Verbindungsvorrichtung (404, 405) angeordnet ist und der eine Außenwand aufweist, die so ausgebildet ist, dass sie eingerichtet ist, dass sie entlang einer Innenwand des ersten Befestigungselements gleitet, wenn sie in das erste Befestigungselement eingeführt wird;
**dadurch gekennzeichnet, dass** ein Gehäuse der Adaptervorrichtung (601, 602, 603) mit mindestens einer gekrümmten Nut (1001) versehen ist, eine Außenwand des Verbindungsvorrichtungsgehäuses (408) mit mindestens einem Vorsprung (1101) an einem Teil davon versehen ist, das zweite Befestigungselement ferner ein elastisches Element (409) an der proximalen Endseite davon aufweist; und
die Nut (1001) so konfiguriert ist, dass, wenn das zweite Befestigungselement in das erste Befestigungselement eingeführt wird, der Vorsprung (1101) in die Nut (1001) eingeführt wird, und, wenn der Vorsprung (1101) entlang der Nut (1001) eingeführt wird, das elastische Element (409) dazu eingerichtet ist, den scheibenförmigen Flansch (407) zu drücken, wodurch der erste Kupplungsanschluss (602) und der zweite Kupplungsanschluss (404) miteinander verbunden werden, wobei anschließend, wenn das zweite Befestigungselement weiter in die Einführungsrichtung gedrückt wird, der Vorsprung (1101) entlang der Nut (1001) geschoben und der Vorsprung nach einer Rückwärtsbewegung in einer Richtung entgegengesetzt zu der Einführungsrichtung gestoppt wird,
wobei der scheibenförmige Flansch (407) nicht mit dem elastischen Element (409) in Kontakt steht.

2. Kupplungsvorrichtung nach Anspruch 1, wobei an der Verbindungsvorrichtung (404, 405) Vorsprünge (704) ausgebildet sind und an der Adaptervorrichtung (601, 602, 603) Klauen (605) ausgebildet sind, wobei die Vorsprünge (704) mit Klauen (605) in Eingriff zu bringen sind.

3. Kupplungsvorrichtung nach Anspruch 1, wobei das zweite Befestigungselement drehbar innerhalb des Verbindungsvorrichtungsgehäuses (408) gehalten wird.

4. Kupplungsvorrichtung nach Anspruch 1,
wobei die Nut (1001) so konfiguriert ist, dass der Vorsprung (1101) in einer Drehrichtung senkrecht zur Einführungsrichtung verläuft, nachdem eine Kehrtwendung von der Einführungsrichtung vorgenommen wurde.

5. Kupplungsvorrichtung nach Anspruch 1,
wobei das elastische Element (409) ein Harz- oder Metallelement ist.

6. Optische Bildgebungsvorrichtung, umfassend:
eine optische Sonde (101) mit einem Lichtwellenleiter, der drehbar darin aufgenommen ist;
eine Steuereinrichtung (111), die eine Lichtquelle aufweist und die ein Signal zu der optischen Sonde (101) sendet und von dieser empfängt; und
eine Kupplungsvorrichtung nach einem der vorhergehenden Ansprüche, durch welche die optische Sonde und die Steuereinrichtung miteinander verbunden werden.

## Revendications

1. Dispositif d'accouplement pour accoupler des câbles à fibres optiques (401) comprenant :
un premier élément de fixation qui a une première borne de connexion (602) disposée à l'intérieur d'un dispositif d'adaptation (601, 602, 603) et qui a une partie creuse ouverte au niveau de son extrémité ; et
un second élément de fixation qui a une seconde borne de connexion (404) disposée à l'intérieur d'un dispositif de connexion (404, 405) et qui a une paroi extérieure formée de manière à être adaptée pour coulisser le long d'une paroi intérieure du premier élément de fixation une fois inséré dans le premier élément de fixation ;
**caractérisé en ce qu'**un boîtier du dispositif d'adaptation (601, 602, 603) est muni d'au moins une rainure courbe (1001), une paroi extérieure du boîtier de dispositif de connexion (408) est munie d'au moins une saillie (1101) au niveau d'une partie de celle-ci, le second élément de fixation comprend en outre un élément élastique (409) sur son côté d'extrémité proximale ; et
la rainure (1001) est conçue de telle sorte que, lorsque le second élément de fixation est inséré dans le premier élément de fixation, la saillie (1101) est insérée dans la rainure (1001), et avec la saillie (1101) insérée de long de la rainure (1001), l'élément élastique (409) est adapté pour serrer la bride en forme de disque (407), de sorte que la première borne de connexion (602) et la seconde borne de connexion (404) sont connectées l'une à l'autre, alors, avec le second élément de fixation poussé davantage dans la direction d'insertion, la saillie (1101) coulisse le long de la rainure (1001), et la saillie est arrêtée après un mouvement de retour dans une direction inverse à la direction d'insertion, où la bride en forme de disque (407) n'est pas en contact avec l'élément élastique (409).

2. Dispositif d'accouplement selon la revendication 1, dans lequel des saillies (704) sont formées sur le dispositif de connexion (404, 405) et des griffes (605) sont formées sur le dispositif d'adaptation (601, 602, 603), les saillies (704) venant en prise avec les griffes (605).

3. Dispositif d'accouplement selon la revendication 1, dans lequel le second élément de fixation est maintenu en rotation à l'intérieur du boîtier de dispositif de connexion (408).

4. Dispositif d'accouplement selon la revendication 1, dans lequel la rainure (1001) est conçue de sorte que la saillie (1101) avance dans une direction de rotation perpendiculaire à la direction d'insertion, après avoir fait un tournant en U à partir de la direction d'insertion.

5. Dispositif d'accouplement selon la revendication 1, dans lequel l'élément élastique (409) est un élément en résine ou métallique.

6. Dispositif d'imagerie optique comprenant :
une sonde optique (101) ayant une fibre optique incorporée de manière rotative ;
un dispositif de commande (111) qui a une source de lumière et qui envoie et reçoit un signal vers et depuis la sonde optique (101) ; et
un dispositif d'accouplement selon l'une quelconque des précédentes revendications par lequel la sonde optique et le dispositif de commande sont connectés l'un à l'autre.
